## Europäisches Patentamt

## European Patent Office

## Office européen des brevets

(11) Veröffentlichungsnummer: **0 036 198**
**B1**

(12) ## EUROPÄISCHE PATENTSCHRIFT

(45) Veröffentlichungstag der Patentschrift:
**27.06.84**

(21) Anmeldenummer: **81101884.5**

(22) Anmeldetag: **13.03.81**

(51) Int. Cl.³: **F 16 H 7/10,** F 16 H 7/22 //
**A01D69/00**

(54) **Kupplungsmässig steuerbarer Riementrieb.**

(30) Priorität: **14.03.80 US 130271**

(43) Veröffentlichungstag der Anmeldung:
**23.09.81 Patentblatt 81/38**

(45) Bekanntmachung des Hinweises auf die Patenterteilung:
**27.06.84 Patentblatt 84/26**

(84) Benannte Vertragsstaaten:
**AT BE CH DE FR GB IT LI NL SE**

(56) Entgegenhaltungen:
**DE - A - 1 955 225**
**DE - C - 612 083**
**GB - A - 1 523 524**
**US - A - 2 133 512**
**US - A - 2 523 166**
**US - A - 3 800 612**
**US - A - 3 812 917**
**US - A - 4 128 017**

(73) Patentinhaber: **DEERE & COMPANY, 1 John Deere Road, Moline Illinois 61265 (US)**

(72) Erfinder: **Boushek, Sidney Joseph, Jr., 1009 Hamilton, Ottumwa Iowa 52501 (US)**
Erfinder: **Unterzuber, Travis Brian, 1400 E. Pennsylvania Road, Ottumwa Iowa 52501 (US)**

(74) Vertreter: **Fricke, Joachim, Dr. et al, Dr. R. Döring, Dr. J. Fricke, Patentanwälte Josephspitalstrasse 7, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen kupplungsmäßig steuerbaren Riementrieb, bestehend aus zwei durch einen endlosen Riemen verbundene und — zum Auskuppeln — relativ aufeinander zu und — zum Einkuppeln — relativ voneinander weg bewegbare Riemenscheiben, bei dem eine, insbesondere die angetriebene Riemenscheibe ortsfest an einem Tragteil und die andere Riemenscheibe an einem gegenüber dem Tragteil gesteuert schwenkbaren Betätigungsglied gelagert ist und bei dem eine an dem Riemen angreifende Spannrolle mittels eines schwenkbaren Spannrollenarmes gegenüber dem Tragteil und gegenüber dem Betätigungsglied beweglich angeordnet und in Spannrichtung durch eine Vorspanneinrichtung elastisch vorgespannt ist.

Ein kupplungsmäßig steuerbarer Riementrieb dieser Art ist aus der US-A-2 133 512 bekannt. Bei dieser bekannten Anordnung wird von der Ausgangsscheibe eines Motors über einen Riemen eine mittels eines Tragteils um eine gestellfeste Schwenkachse schwenkbare Riemenscheibe angetrieben, wobei der Tragteil über einen zweiten Arm mit einem Betätigungsglied verbunden ist, das im Einwirkungsbereich der Bedienungsperson liegt. Dadurch kann der Antrieb der beweglichen Riemenscheibe durch Annäherung an die Scheibe des Motors unterbrochen bzw. durch relative Auseinanderbewegung der beiden Riemenscheiben zur Wirkung gebracht werden. Die bewegliche Riemenscheibe ist gleichachsig und fest mit einer zweiten Riemenscheibe verbunden, über die ein weiterer Riemen läuft, der zum Antrieb der Laufräder des betreffenden Gerätes dient. An diesem zweiten Riemen greift eine Spannrolle an, die um die gleiche gestellfeste Achse wie der Tragteil schwenkbar ist und unter der Einwirkung einer Vorspannfeder steht. Dadurch folgt die Spannrolle ständig den Bewegungen des zweiten Riemens, um diesen ständig gespannt zu halten, unabhängig vom Kupplungs- oder Entkupplungszustand des ersten Riemens. Bei Riementrieben mit nur einem Antriebsriemen führt diese Maßnahme zu Schwierigkeiten, da die Spannrolle den einzigen Riemen ständig gespannt zu halten sucht. Man hat schon versucht, die Spannrolle in diesem Fall beweglich und damit steuerbar zu lagern. Dies führt bei kompakter Bauweise zu erheblichen Schwierigkeiten, da häufig nicht genügend Platz für die Anordnung einer beweglichen Spannrolle vorhanden ist.

Es ist ferner bekannt, die Spannrolle und die bewegliche Riemenscheibe an einem gemeinsamen Tragteil anzuordnen und diesen um eine gestellfeste Achse schwenkbar anzuordnen, um so für beide Antriebsrichtungen gleichartige Spann- und Antriebsverhältnisse zu erhalten (vgl. DE-C-612 083). Hierbei führen die bewegliche Riemenscheibe und die Spannrolle gleichartige Bewegungen aus, so daß diese Anordnung nur geeignet ist für Fälle, bei denen die zweite Riemenscheibe keine definierte Achsstellung besitzen muß.

Eine weitere Möglichkeit für die Ausbildung eines kupplungsmäßig steuerbaren Riementriebes zeigt die GB-A-1 523 524. Bei diesem bekannten Riementrieb wird über eine von der Bedienungsperson betätigbare Handhabe die Spannrolle beweglich gesteuert und gleichzeitig ein zusätzliches, an dem Riemen angreifendes Steuerglied bewegt, um den Riemen bei Entkupplung von einer zugehörigen Riemenscheibe abzuheben und beim Einkuppeln wieder auf die zugehörige Riemenscheibe aufzulegen. Diese Anordnung ist sehr aufwendig und bedarf erheblichen Raumes zum Einbau der zusätzlichen beweglichen Teile.

Aus der US-A-4 128 017 ist ein Riementrieb mit veränderlichem Antriebsverhältnis bekannt. Auf einer treibenden Welle ist gestellfest eine erste Riemenscheibe 30 angeordnet, die über einen Antriebsriemen mit einer von zwei gleichachsig angeordneten Riemenscheiben verbunden ist. Die zweite gleichachsig angeordnete Riemenscheibe ist über einen weiteren Riemen mit der getriebenen Riemenscheibe verbunden. Diesem zweiten Riemen ist eine an einem Spannrollenarm gelagerte Spannrolle zugeordnet, die über eine Zugfeder mit dem einen Arm eines um eine gestellfeste Achse schwenkbaren zweiarmigen Betätigungsgliedes verbunden ist, an dessem anderen Arm die beiden gleichachsigen Riemenscheiben gelagert sind. An dem Betätigungsglied greift eine Betätigungseinrichtung zum zwangsweisen Verschwenken an. Die beiden gleichachsigen Riemenscheiben sind als Geschwindigkeitswechseleinrichtung ausgebildet, indem die beiden Riemenscheiben gegenläufig ihren wirksamen Durchmesser ändern können. Die Änderung erfolgt durch Veränderung der Spannungen an den beiden Riemen durch Verschwenkung des Betätigungsgliedes. Zum Einkuppeln wird der treibende Riemen gespannt, so daß sich der wirksame Durchmesser der diesem Riemen zugeordneten Riemenscheibe verringert, während der getriebene Riemen entspannt wird, so daß sich dessen Riemenscheibe an dem schwenkbaren Betätigungsglied im wirksamen Durchmesser vergrößert. Die in dem getriebenen Riemen auftretende Lockerung wird durch die Spannrolle kompensiert, die unter der zunehmenden Wirkung der an dem Betätigungsglied angreifenden Feder steht. Das Betätigungsglied weist einen Anschlag auf, um in der ausgekuppelten Stellung den Spannrollenarm zwangsläufig aus seiner Arbeitsstellung abzuheben. Hier wird die Verschwenkbarkeit des gleichachsigen Riemenscheibenpaares zur Veränderung des Geschwindigkeitsübersetzungsverhältnisses verwandt und die dadurch bedingten Nachteile bezüglich der Spannung des getriebenen Riemens über eine verstärkte Beaufschlagung der Spannrolle kompensiert.

Eine andere bekannte Ausbildung eines kupplungsmäßig steuerbaren Riementriebes umfaßt eine in einer Gleitführung verschieblich und unter Federvorspannung stehende Spannrolle und eine zum Entkuppeln bzw. Einkuppeln ebenfalls durch eine von der Bedienungsperson mittels Hand betätigbare Spindel unabhängig verschiebbare angetriebene Riemenscheibe (vgl. US-A-3 812 917). Auch hier versucht die Spannrolle ständig den Riemen in Spannung zu halten unabhängig davon, ob die angetriebene Riemenscheibe auch die treibende Riemenscheibe zu oder von dieser weg bewegt wird.

Es ist Aufgabe der Erfindung einen kupplungsmäßig steuerbaren Riementrieb der eingangs näher bezeichneten Art so weiterzubilden, daß bei engstem Einbauraum und hohem Umschlingungsgrad der treibenden und getriebenen Riemenscheiben eine sichere kupplungsmäßige Steuerung mit zuverlässiger Entlastung von Riemen und Scheibenlagern im entkuppelten Zustand gewährleistet ist.

Diese Aufgabe wird erfindungsgemäß dadurch gelöst, daß die Vorspanneinrichtung wirkungsgemäß zwischen dem Betätigungsglied und der Spannrolle derart angeordnet ist, daß bei Bewegung des Betätigungsgliedes mit der daran gelagerten Riemenscheibe in Richtung auf die andere Riemenscheibe zu die Spannrolle zwangsläufig von dem Riemen weg bewegt wird und umgekehrt. Bei dieser Ausführung wird gewährleistet, daß die Vorspanneinrichtung bei eingekuppeltem Riementrieb zuverlässig die Riemenspannung einstellt und gleichzeitig beide Riemenscheiben von dem Riemen über möglichst große Umfangslängen umschlungen werden. Wenn dagegen der Riementrieb entkuppelt wird, wird gleichzeitig die Wirkung der Spannrolle auf den Riemen aufgehoben, ohne daß die Wirkung der Vorspanneinrichtung aufgehoben oder verändert wird. Im entkuppelten Zustand werden somit der Riemen und die Scheibenlager zuverlässig entlastet, ohne daß für den eingekuppelten Zustand die Wirkung der Vorspanneinrichtung und damit die Spannwirkung der Spannrolle verändert werden.

Die Anordnung läßt sich auf engstem Raum verwirklichen, da durch die gleichzeitige, aber gegenläufige Bewegung von Riemenscheibe und Spannrolle und die gleichzeitige zwangsweise Bewegung der Spannrolle für alle Teile nur geringe Stellwege benötigt werden.

Vorteilhafterweise ist der Spannrollenarm mittig gelagert und somit zweiarmig ausgebildet, wobei an dem einen Arm die Spannrolle gelagert ist, während der andere Arm durch die Vorspannfeder beaufschlagt ist. Dies trägt dazu bei, den Einbauraum klein zu halten.

Die Vorspanneinrichtung weist zweckmäßigerweise eine an dem Betätigungsglied angebrachte Stange auf, auf der die Druckfeder angeordnet ist und auf der der betreffende Arm des Spannrollenarmes zwischen der Druckfeder und einem auf der Stange einstellbaren Anschlag verschiebbar ist. Auf diese Weise erhält man auf engem Raum eine sichere Verknüpfung der Schaltbewegungen der verschiedenen Teile.

Zur Verringerung des Einbauraumes trägt auch bei, wenn der Spannrollenarm um die gleiche Achse wie das als einarmiger Hebel ausgebildete Betätigungsglied schwenkbar ist.

Bei dem neuen Riementrieb können die treibende und die getriebene Riemenscheibe mit sehr kurzem Mittenabstand angeordnet werden, ohne daß die kupplungsmäßige Steuerung dadurch beeinträchtigt würde. Durch das gemeinsame Beeinflussen der Lage der beweglichen Riemenscheibe und der Spannrolle sind nur sehr kleine Kupplungswege notwendig, so daß trotz geringen Platzbedarfs eine sichere kupplungsmäßige Steuerung durch abgestimmte Bewegungen von Riemenscheibe und Spannrolle möglich sind. Trotz geringer Länge der Kupplungswege wird eine zuverlässige Entspannung des Riemens im entkuppelten Zustand gewährleistet, so daß der Riemen und die Scheibenlager zuverlässig entlastet sind. Dadurch wird auch die Lebensdauer des Riementriebes wesentlich verbessert. Auch bei geringem Mittenabstand der Riemenscheiben wird ein hoher Umschlingungsgrad der Riemenscheiben durch den Riemen gewährleistet, was für einen sicheren Antrieb wichtig ist.

Die Erfindung wird nachfolgend anhand schematischer Zeichnungen an einem Ausführungsbeispiel näher erläutert. Es zeigt

Fig. 1 anhand eines Blockschaltbildes die wichtigsten Komponenten eines beweglichen Gerätes oder einer Maschine mit einem kupplungsmäßig steuerbaren Riementrieb gemäß der Erfindung;

Fig. 2 in Seitenansicht den Riementrieb gemäß der Erfindung, und zwar im kupplungsmäßig eingerückten Zustand;

Fig. 3 in ähnlicher Darstellung wie Fig. 2 den Riementrieb im ausgerückten Zustand und

Fig. 4 einen Schnitt entlang der Schnittlinie IV-IV der Fig. 2.

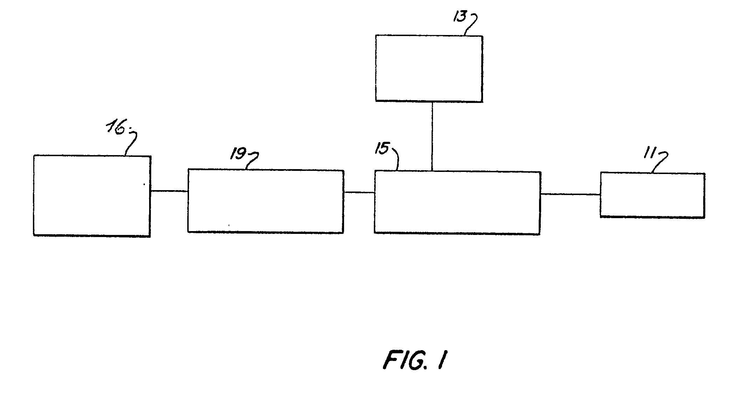

Das Blockschaltbild nach Fig. 1 zeigt die bevorzugte Anwendung des Riementriebes gemäß der Erfindung bei einem beweglichen Gerät, z. B. einer selbstfahrenden Erntemaschine.

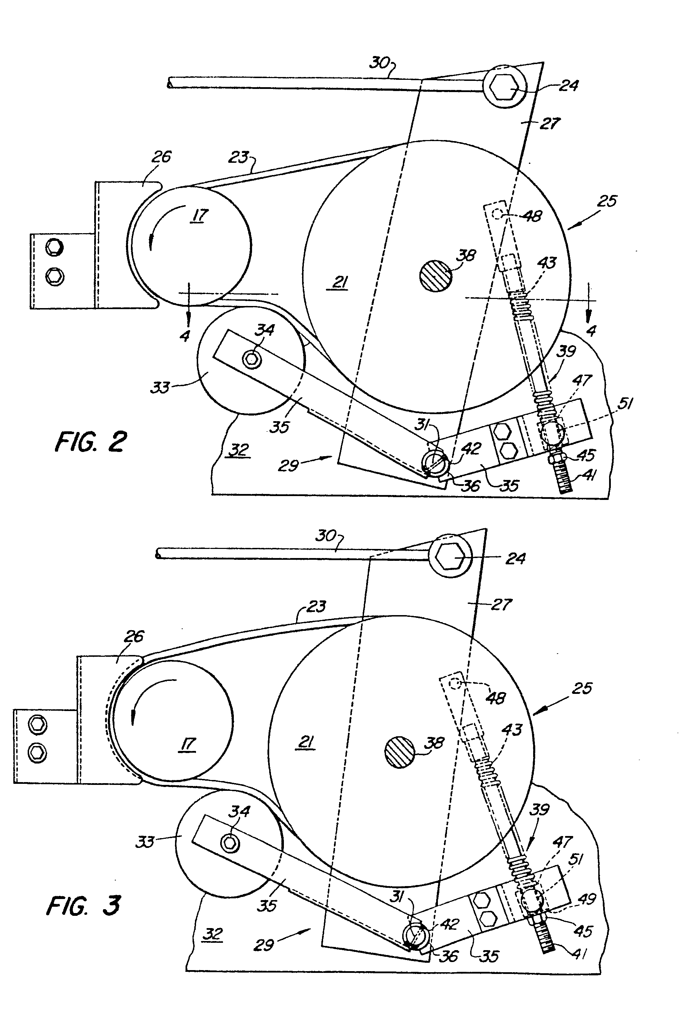

Es ist bei solchen Geräten bekannt, daß das Arbeitswerkzeug 11 der Maschine, z. B. ein Arbeitskopf zum Schneiden, Konditionieren und Zusammenziehen zu Schwaden des Erntematerials, durch die Antriebsmaschine 13 des Gerätes angetrieben wird, welche Antriebsmaschine zugleich zur Fahrtbewegung der Maschine dient. Der Antrieb des Arbeitskopfes 11 erfolgt durch einen Riementrieb 15. Der Antrieb des Werkzeugkopfes 11 wird durch eine Bedienungsperson von einem Steuerstand 16 des beweglichen Gerätes über eine kupplungsmäßige Steuereinrichtung betätigt. Zu diesem Zweck ist eine Steuerhandhabe in dem Steuerstand 16 mit dem Riementrieb 15 verbunden. Hierzu kann ein übliches Steuergestänge 19 mit zwei stabilen Stellungen beiderseits der Mittelstellung vorgesehen sein. Der Werkzeugkopf wird selektiv durch Einrücken und Ausrücken einer kupplungsmäßigen Anordnung in dem Riementrieb 15 angetrieben. Der Riementrieb 15 ist in seinen Einzelheiten in den Fig. 2 bis 4 dargestellt.

Der Riementrieb 15 weist eine erste oder die Antriebskraft einleitende Riemenscheibe 17 auf, die z. B. antriebsmäßig mit der Kurbelwelle (nicht gezeigt) der Fahrzeugmaschine 13 verbunden ist. Weiterhin ist eine zweite abtriebsseitige Riemenscheibe 21 vorgesehen. Über beide Riemenscheiben ist ein Riemen 23 geschlungen, der diese und eine Kupplungseinrichtung 25 antriebsmäßig verbindet. Eine Riemenführung 26 ist der Riemenscheibe 17 zugeordnet, um den Riemen 23 auf der Riemenscheibe 17 zu halten, wenn die Kupplung gemäß Fig. 3 ausgerückt ist. Die Führung 26 kann an einem gestellfesten Teil festgeschraubt sein.

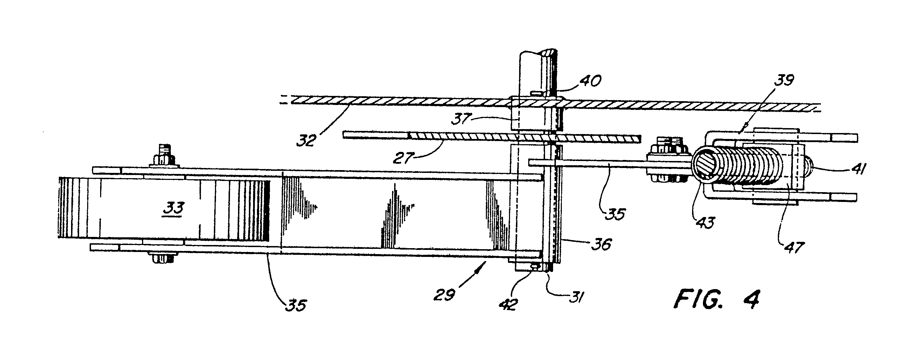

Die Kupplungseinrichtung 25 sorgt für ein Einrücken und Ausrücken der antriebsmäßigen Verbindung zwischen den beiden Riemenscheiben 17 und 21. Die kupplungsmäßige Einrichtung 25 umfaßt ein Betätigungsglied 27 und eine Spannrollenvorrichtung 29. Das Betätigungsglied ist über eine Welle 31 in Buchsen 36 und 37 nach Fig. 4 schwenkbar gelagert und in axialer Richtung durch splintförmige Stifte 40 und 42 gesichert. Die Buchse 37 ist an einem gestellfesten Teil 32 befestigt, der das Gewicht der Kupplungseinrichtung 25 und der Riemenscheibe 21 aufnimmt. Die Riemenscheibe 21 ist auf dem Betätigungsglied 27 über eine Welle 38 drehbar gelagert. Sie ist mit dem Betätigungsglied 27 durch Schwenkbewegung um die Längsachse der Welle 31 auf die andere Riemenscheibe 17 zu bzw. von dieser weg schwenkbar. Ein Steuerarm 30 verbindet das Betätigungsglied 27 mit dem Steuergestänge 19 nach Fig. 1. Dadurch kann das Betätigungsglied 27 zwischen der Einrückstellung und der Ausrückstellung (Fig. 2 bzw. 3) unter Fernbedienung von dem Steuerstand 17 aus bewegt werden. Der Arm 30 ist über Bolzen 24 an dem Betätigungsglied 27 angelenkt. Durch die über das Betätigungsglied 27 bewirkte Bewegung der Riemenscheibe 21 relativ zur Riemenscheibe 17 wird ein Teil der Kupplungswirkung durch Lockerung und Spannung des Riemens 23 gemäß den Fig. 2 und 3 erreicht.

Die Spannrollenanordnung 29 bildet einen anderen integralen Teil der Kupplungsanordnung 25. Sie umfaßt eine Spannrolle 33, die an einem Tragarm 35 unterstützt ist, der schwenkbar auf der Welle 31 des Betätigungsgliedes gelagert ist. Weiterhin ist eine Vorspanneinrichtung 39 vorgesehen, um den Tragarm 35 und die daran drehbar gelagerte Spannrolle 33 in Richtung auf das rücklaufende Trum des Riemens 23 vorzuspannen. Außerdem kann über die Vorspanneinrichtung 39 die Spannrolle zusätzlich auf das rücklaufende Trum des Riemens zu bzw. von diesem weg geschwenkt werden, und zwar in Abhängigkeit von einer Schwenkbewegung des Betätigungsgliedes 27 um die Längsachse der Welle 31. Der Arm 35 ist beispielsweise durch Schweißen an der Buchse 36 befestigt, die ihrerseits schwenkbar und koaxial auf der Welle 31 gelagert ist. Das eine Ende des Armes 35 trägt auf einem Zapfen 34 frei drehbar die Spannrolle 33. Das andere Ende ist mit der Vorspanneinrichtung 39 verbunden.

Die Vorspanneinrichtung 39 ist zwischen dem Betätigungsglied 27 und der Spannrollenanordnung 29 eingeschaltet, um die Vorspannung für die Spannrollenanordnung 29 zu liefern und die zusätzliche Bewegung der Spannrollenanordnung in Richtung auf den Riemen 23 zu und von diesem weg zu steuern. Die Vorspanneinrichtung 39 weist eine zentrale Stange 41 auf, die bei 48 an dem Betätigungsglied 27 angelenkt ist. Auf der Stange 41 ist eine Druckfeder 43 aufgefädelt. Am anderen Ende der Stange ist ein einstellbarer Anschlag 45 vorgesehen. Zwischen dem Anschlag 45 und dem diesen zugewandten Ende der Feder 43 greift die Stange 41 in ihrer Längsrichtung verschiebbar durch eine Öffnung 51 in einem unteren Abschnitt des zweiarmigen Tragteils 35. Die Position des Tragarmes 35 wird durch die Druckfeder 43 bestimmt, die an dem einen Ende des Tragarmes 35, und zwar an der Fläche 47 dieses Armes anliegt, sowie durch den Anschlag 45, an den sich die Fläche 49 des Armes 35 anlegen kann.

Bei Betrieb wird die antriebsmäßige Verbindung zwischen der die Antriebskraft einleitenden Riemenscheibe 17 und der die Antriebskraft ableitenden Riemenscheibe 21 des Riementriebes 15 durch Einrücken und Ausrücken der Kupplungsanordnung 25 gesteuert. Die Kupplungsanordnung 25 ermöglicht das Einrücken und Ausrücken dadurch, daß einerseits die Spannrolle 33 der Spannrollenanordnung 29 auf den Riemen zu und von diesem weg bewegt wird und daß andererseits die Riemenscheibe 21 von der Riemenscheibe 17 weg bzw. auf diese zu bewegt wird, und zwar durch Verschwenken des Steuergestänges 19 am Steuerstand 16. Die Riemenscheibe 21 ist auf dem Betätigungsglied 27 drehbar gelagert und ist zusammen mit diesem Betätigungsglied mit Hilfe des Steuerarmes 30 schwenkbar um die Welle 31 zwischen der Kupplungseingriffsstellung nach Fig. 2 und der Kupplungsausrückstellung nach Fig. 3 bewegbar. Durch die Verbindung zwischen der Riemenscheibe 21 und der Spannrollenanordnung 29 kann über das Betätigungsglied 27 eine gleichzeitige und koordinierte Bewegung der Riemenscheibe 21 und der Spannrolle 29 erfolgen, und zwar in dem Sinne, daß beide Bewegungen sich im kupplungsmäßigen Einrücken und kupplungsmäßigen Ausrücken unterstützen.

Der Tragarm 35, der auf der Welle 31 der Kupplungsanordnung 25 schwenkbar gelagert ist, ist mit dem Betätigungsglied 27 durch die Vorspanneinrichtung 39 verbunden. Wenn der Riementrieb aus der Ausrückstellung nach Fig. 3 in die Einrückstellung nach Fig. 2 bewegt wird, schwenken die Spannrolle 33 und der Tragarm 35 zusammen mit der Riemenscheibe 21 und dem Betätigungsglied 27 im Uhrzeigersinne in den Fig. 2 und 3, und zwar um die gemeinsame Achse der Welle 31 des Betätigungsgliedes. Die Schwenkbewegung erfolgt so lange, bis der lokkere Zustand des Riemens nahezu vollständig beseitigt ist. An diesem Punkt setzt das Betätigungsglied 27 die Bewegung im Uhrzeigersinne um die Achse der Welle 31 über einen kurzen Weg noch fort, um die gewünschte Riemenspannung zu gewährleisten, während der Tragarm 35 und die Spannrolle 33 von diesem Augenblick an im wesentlichen stationär verbleiben. Die Bewegung des Betätigungsgliedes 27 gegenüber dem Tragarm 35 führt dazu, daß die Stange 31 noch ein wenig in ihrer Längsrichtung durch die Öffnung 41 gleitet und die Feder 43 gegen die Fläche 47 in der Stellung nach Fig. 2 vorspannt. Die Geometrie des Tragarmes 35 und die Federkraft der Feder 43 sorgen für das gewünschte Drehmoment am Arm 35, um das Rücklauftrum des Riemens 23 unter der gewünschten Vorspannung zu halten. Der Riementrieb 15 wird in der Einrückstellung durch das Steuergestänge 19 und den damit verbundenen Steuerarm 30 gehalten.

Aus der Einrückstellung nach Fig. 2 kann die kupplungsartige Anordnung in die ausgerückte Stellung nach Fig. 3 dadurch überführt werden, daß die beschriebenen Bewegungen rückläufig ausgeführt werden. Das heißt, daß das Gestänge 19 manuell an der Steuerstation 17 aus der Einrückstellung in die Ausrückstellung geschwenkt wird, wodurch der Steuerarm 30 in Längsrichtung, und zwar in Fig. 2 nach links bewegt wird, um das Betätigungsglied im Gegenuhrzeigersinne um die Achse der Welle 31 zu schwenken. Dadurch wird die Riemenscheibe 21 in Richtung auf die Riemenscheibe 17 bewegt. Gleichzeitig wird die Vorspannanordnung durch die Bewegung des Betätigungsgliedes 27 im Gegenuhrzeigersinne beeinflußt, und zwar derart, daß die Vorspannung der Feder 43 auf die Fläche 47 des Armes 35 nachläßt, bis sich der Arm 35 an dem Anschlag 45 anlegt. Nachfolgend bewegt sich infolge der weiteren Schwenkbewegung des Betätigungsgliedes 27 der Arm 35 ebenfalls im Gegenuhrzeigersinne um die Achse der Welle 31, so daß die Spannrolle 33 in Richtung vom Riemen weg bewegt wird. Die beiden Bewegungen der Riemenscheibe 21 auf die Riemenscheibe 17 zu und der Spannrolle 33 vom Riemen 23 weg führt zu einer Entspannung und Lockerung des Riemens, wie dies in Fig. 3 gezeigt ist. In dieser Stellung wird die Anordnung gehalten, bis das Steuergestänge 19 an der Steuerstation 17 erneut betätigt wird.

Es ist ersichtlich, daß der beschriebene Riementrieb die Vorteile einer kupplungsartigen Bewegung einer Riemenscheibe und die Vorteile einer kupplungsartigen Bewegung einer unter Federvorspannung stehenden Spannrolle vereinigt, ohne deren Nachteile aufzuweisen. Dadurch, daß auch die Riemenscheibe als ein Teil an der Kupplungswirkung teilnimmt, kann eine ausreichende Riemenlänge aufgenommen werden, um auch bei sehr kurzem Mittenabstand zwischen den Riemenscheiben 17 und 21 eine zuverlässige Kupplungswirkung zu gewährleisten. Dadurch, daß auch die Spannrolle zur Kupplungswirkung herangezogen wird, wird gewährleistet, daß die Spannungsbelastung des Riemens und der anderen Teile des Riementriebes mit dem augenblicklichen Leistungsbedarf variiert, so daß die Teile nicht ständig unter der maximalen Spannung gehalten werden, wie dies bei bekannten kupplungsartig steuerbaren Riementrieben der Fall ist. Die einzelnen Komponenten des Riementriebes erhalten dadurch eine längere Lebensdauer. Die zusätzliche Verwendung der Spannrolle ermöglicht außerdem einen größeren Umschlingungswinkel der Riemenscheiben, so daß bei gleicher Riemenspannung höhere Antriebskräfte übertragen werden können.

**Patentansprüche**

1. Kupplungsmäßig steuerbarer Riementrieb, bestehend aus zwei durch einen endlosen Riemen verbundene und — zum Auskuppeln — relativ aufeinander zu und — zum Einkuppeln — relativ voneinander weg bewegbare Riemenscheiben, bei dem eine, insbesondere die angetriebene Riemenscheibe ortsfest an einem Tragteil und die andere Riemenscheibe an einem gegenüber dem Tragteil gesteuert schwenkbarem Betätigungsglied gelagert ist, und bei dem eine an dem Riemen angreifende Spannrolle mittels eines schwenkbaren Spannrollenarmes gegenüber dem Tragteil und gegenüber dem Betätigungsglied beweglich angeordnet und in Spannrichtung durch eine Vorspanneinrichtung elastisch vorgespannt ist, dadurch gekennzeichnet, daß die Vorspanneinrichtung (39) wirkungsmäßig zwischen dem Betätigungsglied (27) und der Spannrolle (33) derart angeordnet ist, daß bei Bewegung des Betätigungsgliedes (27) mit der daran gelagerten Riemenscheibe (21) in Richtung auf die andere Riemenscheibe (17) zu die Spannrolle (33) zwangsläufig von dem Riemen (23) weg bewegt wird und umgekehrt.

2. Riementrieb nach Anspruch 1, dadurch gekennzeichnet, daß der Spannrollenarm (35) mittig gelagert und somit zweiarmig ausgebildet ist, wobei an dem einen Arm die Spannrolle gelagert und der andere Arm durch die Vorspanneinrichtung (39) beaufschlagt ist.

3. Riementrieb nach Anspruch 2, dadurch gekennzeichnet, daß die Vorspanneinrichtung (39) eine an dem Betätigungsglied (27) angebrachte Stange (41) aufweist, auf der eine Druckfeder (43) angeordnet ist und auf der der betreffende Arm des Spannrollenarmes (35) zwischen der Druckfeder (43) und einem auf der Stange (41) einstellbaren Anschlag (45) verschiebbar ist.

4. Riementrieb nach Anspruch 3, dadurch gekennzeichnet, daß der Spannrollenarm (35) um die gleiche Achse (31) wie das als einarmiger Hebel ausgebildete Betätigungsglied (27) schwenkbar ist.

## Claims

1. A belt drive controllable in a clutch-like mode, comprising two belt pulleys which are connected by an endless belt and which are relatively movable towards each other for disengagement purposes and relatively movable away from each other for engagement purposes, wherein a belt pulley, in particular the driven belt pulley, is stationarily mounted on a carrier member and the other belt pulley is mounted on an actuating member which is controlledly pivotal relative to the carrier member, and wherein a tensioning roller engaging the belt is arranged movably by means of a pivotal tensioning roller arm relative to the carrier member and relative to the actuating member and is resiliently biassed in the tensioning direction by a biassing means, characterized in that the biassing means (39) is operatively disposed between the actuating member (27) and the tensioning roller (33) in such a way that, upon movement of the actuating member (27) with the belt pulley (21) mounted thereon, in the direction towards the other belt pulley (17), the tensioning roller (33) is positively moved away from the belt (23), and vice-versa.

2. A belt drive according to claim 1, characterized in that the tensioning roller arm (35) is centrally mounted and is of a double-arm construction, wherein the tensioning roller is mounted on the one arm and the other arm is engaged by the biassing means (39).

3. A belt drive according to claim 2, characterized in that the biassing means (39) has a bar (41) which is mounted to the actuating member (27) and on which a compression spring (43) is disposed and on which the respective arm of the tensioning roller arm (35) is displaceable, between the compression spring (43) and an abutment (45) which can be adjusted on the bar (41).

4. A belt drive according to claim 3, characterized in that the tensioning roller arm (35) is pivotal about the same axis as the actuating member (27) which is in the form of a single-arm lever.

## Revendications

1. Transmission à courroie pouvant être commandée pour son accouplement, comportant deux poulies reliées par une courroie sans fin et déplaçables l'une vers l'autre de façon relative pour le débrayage de la transmission et à l'écart l'une de l'autre de façon relative pour l'embrayage, dans laquelle une poulie, en particulier la poulie menée, est montée à poste fixe sur un support, et l'autre poulie est montée sur un organe d'actionnement pouvant pivoter de façon commandée par rapport au support, et dans laquelle un galet de tension attaquant la courroie est monté de façon déplaçable, au moyen d'un bras pivotant portant ce galet de tension, par rapport au support et par rapport à l'organe d'actionnement, et est soumis à une sollicitation élastique dans le sens de la mise en tension par un dispositif de mise en tension préalable, caractérisée en ce que le dispositif de mise en tension préalable (39) est monté fonctionnellement entre l'organe d'actionnement (27) et le galet de tension (33) de telle sorte que, lors du déplacement de l'organe d'actionnement (27) avec la poulie (21) montée sur lui en direction de l'autre poulie (17), le galet de tension (33) soit déplacé positivement à l'écart de la courroie (23), et inversement.

2. Transmission à courroie suivant la revendication 1, caractérisée en ce que le bras (35) portant le galet de tension est monté par sa partie médiane et se présente ainsi sous la forme d'un levier à deux bras, le galet de tension étant monté sur un bras, tandis que l'autre bras est soumis à une sollicitation par le dispositif (39) de mise en tension préalable.

3. Transmission à courroie suivant la revendication 2, caractérisée en ce que le dispositif (39) de mise en tension préalable comporte une tige (41) adaptée sur l'organe d'actionnement (27), sur laquelle un ressort de compression (43) est disposé, et sur laquelle le bras correspondant du bras (35) portant le galet de tension est déplaçable entre le ressort de compression (43) et une butée (45) réglable sur la tige (41).

4. Transmission à courroie suivant la revendication 3, caractérisée en ce que le bras (35) portant le galet de tension peut pivoter autour du même axe (31) que l'organe d'actionnement (27), qui se présente sous la forme d'un levier à un bras.

*FIG. 1*

FIG. 2

FIG. 3

FIG. 4